# EUROPÄISCHE PATENTANMELDUNG

(11) **EP 4 675 387 A1**
(43) Veröffentlichungstag der Anmeldung: **07.01.2026**
(21) Anmeldenummer: 25150386.8
(22) Anmeldetag: 07.01.2025
(51) Int. Cl.: G05D 1/244, G05D 1/646

(54) **AUTOMATISIERTES TRANSPORTSYSTEM FÜR TRANSPORTBEHÄLTER, VERFAHREN ZUM AUTOMATISIERTEN FAHREN EINES FAHRERLOSEN TRANSPORTFAHRZEUGS UND FAHRERLOSES TRANSPORTFAHRZEUG**

(30) Priorität: 19.01.2024 DE 102024200501
(71) Anmelder: KAMAG Transporttechnik GmbH & Co. KG, 89079 Ulm (DE)
(72) Erfinder: Teuchler, Martin, 89075 Ulm (DE); Bernier, Bénédicte Marie, 89077 Ulm (DE)
(74) Vertreter: Ullrich & Naumann PartG mbB

(57) **Zusammenfassung**

Ein automatisiertes Transportsystem für Transportbehälter, insbesondere Container und/oder Wechselbrücken und/oder Sattelauflieger, vorzugsweise zur Anwendung auf einem Logistikhof, mit einer von einem Transportfahrzeug (1) befahrbaren Oberfläche (2) umfassend mehrere vordefinierte, von dem Transportfahrzeug (1) anfahrbare Posen (3), insbesondere Stellplätze und/oder Laderampen und/oder Docks, wobei jede der anfahrbaren Posen (3) innerhalb eines vordefinierten Manöverbereichs (4) liegt, wobei jeder Manöverbereich (4) mindestens eine Einfahrpose (5) und mindestens eine Ausfahrpose (6) aufweist und wobei mindestens eine Spur (7, 8) für das Transportfahrzeug (1) vordefiniert ist, welche die Manöverbereiche (4) miteinander verbindet, insbesondere deren Einfahrposen (5) und Ausfahrposen (6). Des Weiteren sind Verfahren zum automatisierten Fahren eines fahrerlosen Transportfahrzeugs (1) in einem solchen automatisierten Transportsystem und ein fahrerloses Transportfahrzeug (1) beschrieben.

## Beschreibung

Die Erfindung betrifft ein automatisiertes Transportsystem für Transportbehälter, insbesondere Container und/oder Wechselbrücken und/oder Sattelauflieger, vorzugsweise zur Anwendung auf einem Logistikhof, mit einer von einem Transportfahrzeug befahrbaren Oberfläche.

Weiterhin betrifft die Erfindung ein Verfahren zum automatisierten Fahren eines fahrerlosen Transportfahrzeugs in einem automatisierten Transportsystem.

Des Weiteren betrifft die Erfindung ein fahrerloses Transportfahrzeug.

Aus der Praxis sind Logistikhöfe sowie ähnliche Umschlagplätze für Güter und Transportbehälter seit Jahren bekannt. Hierbei werden regelmäßig Transportbehälter wie Wechselbrücken innerhalb des Logistikhofs transportiert, beispielsweise von einer Laderampe auf einen Abstellplatz oder von einem ersten zu einem zweiten Abstellplatz verbracht. Der Transport erfolgt über sog. Transportfahrzeuge, beispielsweise Wechselbrückenhubwagen, mit welchen die Wechselbrücken aufgenommen, transportiert und an der gewünschten Stelle wieder abgesetzt werden. Um diese Transportaufträge durchzuführen, werden entsprechend ausgebildete Fahrer für das Transportfahrzeug benötigt.

Unter anderem, da der Bedarf an Fahrern das Angebot bei weitem übertrifft und davon auszugehen ist, dass sich dieses Ungleichgewicht zukünftig verschärfen wird, bestehen seit Jahren Bestrebungen, fahrerlose Transportfahrzeuge zu entwickeln, welche Transportaufträge im Außenbereich und Mischbetrieb zuverlässig durchführen. Die hierbei aus der Praxis bekannten fahrerlosen Transportfahrzeuge sowie Verfahren zum Betreiben solcher Transportfahrzeuge liegen hinter den gestellten Anforderungen für einen zuverlässigen Betrieb jedoch noch weit zurück. Insbesondere besteht dabei das Problem, dass die Transportfahrzeuge und die Verfahren zum automatisierten Fahren im Außenbereich und im Mischbetrieb von fahrerlosen Transportfahrzeugen aufwendig in Konstruktion bzw. Durchführung sind und für einen tatsächlich automatisierten Betrieb nicht geeignet sind.

Der vorliegenden Erfindung liegt daher die Aufgabe zugrunde, ein automatisiertes Transportsystem für Transportbehälter anzugeben, welches ein automatisiertes Durchführen von Transportaufträgen mittels eines fahrerlosen Transportfahrzeugs auf unkomplizierte und sichere Weise ermöglicht. Des Weiteren liegt die Aufgabe zugrunde, ein Verfahren zum automatisierten Fahren eines fahrerlosen Transportfahrzeugs derart auszugestalten und weiterzubilden, dass Transportaufträge mit geringem Aufwand zuverlässig und sicher durchführbar sind. Schließlich soll ein fahrerloses Transportfahrzeug zur Durchführung eines solchen Verfahrens angegeben werden.

Erfindungsgemäß wird die voranstehende Aufgabe in Bezug auf das automatisierte Transportsystem durch die Merkmale des Anspruches 1 gelöst. Damit ist ein automatisiertes Transportsystem für Transportbehälter, insbesondere Container und/oder Wechselbrücken und/oder Sattelauflieger, vorzugsweise zur Anwendung auf einem Logistikhof, mit einer von einem Transportfahrzeug befahrbaren Oberfläche umfassend mehrere vordefinierte, von dem Transportfahrzeug anfahrbare Posen, insbesondere Stellplätze und/oder Laderampen und/oder Docks, angegeben, wobei jede der anfahrbaren Posen innerhalb eines vordefinierten Manöverbereichs liegt, wobei jeder Manöverbereich mindestens eine Einfahrpose und mindestens eine Ausfahrpose aufweist und wobei mindestens eine Spur für das Transportfahrzeug vordefiniert ist, welche die Manöverbereiche miteinander verbindet, insbesondere deren Einfahrposen und Ausfahrposen.

In erfindungsgemäßer Weise ist erkannt worden, dass sich Transportaufträge bzw. Fahraufträge erheblich einfacher von einem fahrerlosen Transportfahrzeug durchführen lassen, indem diese in Nahbereichsmanöver und Distanzfahrten aufgeteilt werden. Die Distanzfahrten entsprechen dabei den Fahrten entlang einer Spur von einer Ausfahrpose zu einer Einfahrpose. Durch die mindestens eine Spur, welche in dem erfindungsgemäßen automatisierten Transportsystem definiert ist, wird der Vorteil erzielt, dass das Transportfahrzeug eine fest definierte Trajektorie abfährt, was auf einfache Weise realisierbar ist. Somit ist es auch mit geringem Aufwand möglich, Verkehrsregeln zu beachten, beispielsweise ein Rechtsfahrgebot, und können weitere Verkehrsteilnehmer, Fußgänger, nicht-fahrerlose Fahrzeuge etc., die Bewegungen des fahrerlosen Transportfahrzeugs leicht einschätzen bzw. antizipieren.

Des Weiteren wird durch die Definition der Manöverbereiche ermöglicht, dass, wenn sich das Transportfahrzeug in einem Manöverbereich befindet, eine freie Navigation erfolgen kann. Mit anderen Worten kann in dem Manöverbereich eine individuelle Trajektorie bestimmt werden, welche beispielsweise Hindernisse oder die tatsächliche Pose eines aufzunehmenden Ladungsträgers berücksichtigt. Es besteht somit ein höheres Maß an Flexibilität ein Nahbereichsmanöver durchzuführen, wobei der damit anfallende Aufwand auf ein geringes Maß reduziert ist, nämlich den Manöverbereich als solchen. Das erfindungsgemäße automatisierte Transportsystem ist insbesondere zur Realisierung eines Logistikhofes geeignet bzw. kann in einem solchen eingesetzt werden. Des Weiteren kann das erfindungsgemäße automatisierte Transportsystem in vorteilhafter Weise mindestens ein, vorzugsweise erfindungsgemäßes, fahrerloses Transportfahrzeug aufweisen. Vorzugsweise umfasst das erfindungsgemäße automatisierte Transportsystem mehrere fahrerlose Transportfahrzeuge bzw. eine Flotte von fahrerlosen Transportfahrzeugen.

Im Rahmen dieser Offenbarung ist der Manöverbereich insbesondere als ein von dem fahrerlosen Transportfahrzeug sicher zu befahrbarender Bereich zu verstehen. Eine in dem Manöverbereich liegende Pose ist daher derart definiert, dass die Fahrzeugkontur vollständig im Manöverbereich liegt. Dabei ist es von Vorteil, wenn bei der Überprüfung, ob die Kontur vollständig im Manöverbereich liegt, der Beladungszustand des fahrerlosen Transportfahrzeuges berücksichtigt wird, da der Transportbehälter über die Kontur des fahrerlosen Transportfahrzeuges hinausragen kann.

Die Einfahrpose und die Ausfahrpose eines Manöverbereichs können identisch sein oder sich voneinander unterscheiden.

In vorteilhafter Weise können mindestens eine Einfahrpose und mindestens eine Ausfahrpose pro Intersektion mit einer Spur vorgesehen sein. Die Einfahrpose(n) und/oder die Ausfahrpose(n) können kartiert (d.h. fest im System hinterlegt werden bzw. vordefiniert sein) und/oder ermittelt werden. Die Ermittlung der Einfahrpose(n) und/oder der Ausfahrpose(n) könnte wie folgt ablaufen:
Die Einfahrpose wird ermittelt, indem die Spur auf welcher sich das fahrerlose Transportfahrzeug befindet, erfasst wird und mit dem Manöverbereich eine Schnittmenge gebildet wird. Es wird dann die Pose ermittelt, welche möglichst nah an der Kontur des Manöverbereiches liegt und bei welcher die Kontur des fahrerlosen Transportfahrzeugs bereits vollständig im Manöverbereich liegt. Prinzipiell wären auch andere Posen, welche in der Schnittmenge liegen und bei welchen sich die Fahrzeugkontur im Manöverbereich befindet, wählbar. Aber durch Auswahl der Pose, welche nah an der Kontur des Manöverbereichs liegt, bleibt dem fahrerlosen Transportfahrzeug maximal viel Platz zum Manövrieren. Alternativ oder zusätzlich ist es denkbar und von Vorteil, dass die Ausfahrpose ähnlich ermittelt wird, wobei die Schnittmenge des Manöverbereichs, in dem sich das fahrerlose Transportfahrzeug befindet, mit der Zielspur gebildet wird und sodann wiederum diejenige Pose gewählt wird, welche sowohl möglichst am Rand des Manöverbereichs als auch auf der Spur liegt.

In vorteilhafter Weise können die Manöverbereiche, deren Einfahrposen und Ausfahrposen, und/oder die mindestens eine Spur sowie ggf. weitere Positionen und/oder Posen von Interesse in einer digitalen Karte kartiert sein. Des Weiteren könnte über eine Lokalisierung die Position, ggf. die Pose, des Transportfahrzeugs ermittelt werden. Bei den "weiteren Positionen und/oder Posen" kann es sich um sichtbare Gebäude und/oder Landmarken für eine Positionsbestimmung und/oder Posenbestimmung, beispielsweise über eine Lidar-Lokalisierung handeln. Die Kartierungsdaten könnten in einem externen Datenspeicher, beispielweise einer Cloud, gespeichert sein, auf welchen Nutzer, beispielsweise ein Logistiksystem oder ein fahrerloses Transportfahrzeug, Zugriff hat. Es ist auch denkbar, dass die Kartierungsdaten auf einem lokalen Speicher des jeweiligen Nutzers, beispielsweise eines Transportfahrzeugs abgespeichert sind.

Der Ausdruck "Spur" beschreibt im Rahmen dieser Offenbarung eine fest definierte Abfolge von Wegpunkten, welchen von dem fahrerlosen Transportfahrzeug unter Verwendung von statischen Trajektorien abgefahren werden kann.

Der Ausdruck "Pose" beschreibt ihm Rahmen dieser Offenbarung die Kombination von Position und Orientierung bzw. Ausrichtung eines Objektes, beispielsweise eines Transportfahrzeugs, eines Stellplätze etc.

Der Ausdruck "Ausgangspose" beschreibt im Rahmen dieser Offenbarung die Pose in der sich das Transportfahrzeug zu Beginn des erfindungsgemäßen Verfahrens befindet.

Der Ausdruck "Ausfahrpose" beschreibt im Rahmen dieser Offenbarung insbesondere eine definierte Pose bzw. kartierte Pose eines Manöverbereichs.

Der Ausdruck "Einfahrpose" beschreibt im Rahmen dieser Offenbarung insbesondere eine definierte Pose bzw. kartierte Pose eines Manöverbereichs.

Der Ausdruck "Endpose" beschreibt im Rahmen dieser Offenbarung insbesondere eine definierte Pose bzw. kartierte Pose und/oder eine Pose, die abhängig von der Erkennung eines Ziels, beispielsweise eines Transportbehälters, einer Laderampe etc., durch das Transportfahrzeug erkannt bzw. bestimmt wird. Nachdem das erfindungsgemäße Verfahren durchgeführt worden ist, befindet sich das Transportfahrzeug in der Endpose. Die Endpose könnte beispielsweise eine Pose sein, von welcher aus das fahrerlose Transportfahrzeug ein Absetzmanöver startet, d.h. einen Transportbehälter absetzt bzw. den Transportbehälter zu einem in unmittelbarer Nähe der Endpose befindlichen Stellplatz verbringt und dort absetzt. Des Weiteren könnte die Endpose eine Pose sein, in welcher das fahrerlose Transportfahrzeug einen aufzunehmenden Transportbehälter erkennen und anfahren kann, um diesen aufzunehmen.

Der Ausdruck "Manöverbereich" beschreibt im Rahmen dieser Offenbarung einen definierten Fahrbereich bzw. einen definierten Bereich der befahrbaren Oberfläche, beispielsweise eines Logistikhofes, welcher derart ausgebildet ist, dass das Transportfahrzeug in diesem gefährdungsfrei bewegbar ist. Beispielsweise könnte ausgeschlossen sein, dass ein Manöverbereich in einem abschüssigen Gelände definiert ist, welches von einer Hinderniserkennung nicht geeignet erfassbar ist, oder dass Fußgängerwege oder Glasfassaden von einem Gebäude in dem Manöverbereich liegen.

Der Ausdruck "Startmanöverbereich" beschreibt im Rahmen dieser Offenbarung den Manöverbereich, in dem sich die Ausgangspose befindet.

Der Ausdruck "Endmanöverbereich" beschreibt im Rahmen dieser Offenbarung den Manöverbereich, in dem sich die Endpose befindet.

Bei dem Transportfahrzeug kann es sich beispielsweise um ein Transportfahrzeug zur Nutzung in einem automatisierten Transportsystem handeln, wie es in der Hafenlogistik, der Hoflogistik oder in der Intralogistik in der Industrie anwendbar ist. Generell kann es sich um ein Transportfahrzeug handeln, welches für beliebige Gütertransporte innerhalb eines Betriebsgeländes nutzbar ist. Beispielsweise kann das Transportfahrzeug als ein Wechselbrückenhubwagen, als Zugmaschine, als Industriehubwagen etc. ausgebildet sein.

Der Ausdruck "fahrerloses Transportfahrzeug" beschreibt im Rahmen dieser Offenbarung ein automatisiert fahrendes Transportfahrzeug, welches automatisch gesteuert und geführt wird und dem Zweck der Bewegung von Gütern dient. Zur Vereinfachung wird im Folgenden nicht immer ein "fahrerloses Transportfahrzeug", sondern schlicht ein "Transportfahrzeug" beschrieben, wobei es sich dabei um ein "fahrerloses Transportfahrzeug" handelt. Dabei muss nicht zwangsweise ausgeschlossen sein, dass eine Person in dem fahrerlosen Transportfahrzeug anwesend ist und dieses ggf. bei Bedarf steuert.

In vorteilhafter Weise kann die mindestens eine Spur durch Daten eines Navigationssattelitensystems definiert sein. Alternativ oder zusätzlich ist es denkbar, dass die mindestens eine Spur durch an der befahrbaren Oberfläche angeordnete Markierungen, beispielsweise Transponder und/oder visuelle Markierungen, definiert ist. Sofern die mindestens eine Spur kartiert ist, besteht die Möglichkeit, dass das Transportfahrzeug seine Pose bestimmt und mit den Kartierungsdaten der zu folgenden Spur vergleicht, um dieser zu folgen. Die Posenbestimmung könnte dabei beispielsweise über ein Navigationssatellitensystem erfolgen oder über ebenfalls kartierte Landmarken erfolgen, beispielsweise Gebäude, Gelände, Infrastruktur etc., welche von dem Transportfahrzeug erkannt werden, insbesondere mittels Lidarsensoren oder Kameras, so dass eine Posenbestimmung und Spurverfolgung ermöglicht werden. Auch eine Kombination aus Navigationssatellitensystem und Landmarken könnte hierzu genutzt werden. Wesentlich ist, dass das Transportfahrzeug eine Trajektorie abfahren kann, die der vorgegebenen Spur entspricht bzw. mit dieser übereinstimmt.

In weiter vorteilhafter Weise können zumindest zwei Spuren benachbart zueinander angeordnet sein. Dies hat den Vorteil, dass das Transportfahrzeug einen Spurwechsel vornehmen kann, wenn auf der ursprünglichen Spur ein Hindernis vorliegt. Der Spurwechsel kann auf einfache Weise vorgenommen werden, wobei das Transportfahrzeug nach dem Spurwechsel wieder einer vorgegebenen Trajektorie folgt, mit den damit einhergehenden Vorteilen wie Vorhersehbarkeit und Planbarkeit für die Risiko- bzw. Gefährdungsplanung. Im Konkreten könnte eine dynamische Trajektorie berechnet werden ausgehend von einem der vorausfolgenden Wegpunkte der Spur auf der sich das Transportfahrzeug befindet hin zu einem Wegpunkt (Zielwegpunkt) auf der zu wechselnden Spur (Zielspur). Dabei ist es denkbar und von Vorteil, wenn benachbarte Spuren zumindest im Wesentlichen parallel zueinander verlaufen. Die Parallelität der Spuren vereinfacht dabei die Wahl eines geeigneten Zielwegpunktes der Zielspur. Vorzugsweise liegt ein Abstand von maximal einer Transportfahrzeugbreite zwischen benachbarten Spuren vor. Dadurch kann gewährleistet werden, dass das Transportfahrzeug in-situ eine individuelle Trajektorie für den Spurwechsel berechnen kann, nämlich aufgrund eines geringeren Berechnungsaufwandes sowie aufgrund der Einsehbarkeit des zu befahrenden Bereichs durch Sensoren des Transportfahrzeugs. Ein Abstand von 0,5m bis 1m ist von Vorteil, da damit bereits eine Vielzahl von möglichen Hindernissen, beispielsweise seitlich am Fahrweg geparkte Fahrzeuge, umfahren werden kann, die benachbarten Spuren aber so eng beieinanderliegen, dass der Spurwechsel mit geringem Aufwand möglich ist. Dabei ist wesentlich, dass eine "Spur" im Rahmen dieser Offenbarung eine Breite von 0 bzw. im Wesentlichen Null aufweisen kann. Die Breite der Spur ist insbesondere durch die Toleranz der Lokalisierungsgenauigkeit vorgegeben, so dass eine Breite von "im Wesentlichen Null" beispielsweise aufgrund der Lokalisierungsgenauigkeit bei ca. 10 cm liegen könnte. Somit unterscheidet sich die "Spur" von der "Fahrbahn" des Transportfahrzeugs, welche eine für das Transportfahrzeug notwendige Breite aufweisen muss. Die Fahrbahnen benachbarter Spuren können somit überlappen. Es ist denkbar, dass eine Spur lediglich in einer definierten Fahrtrichtung von dem fahrerlosen Transportfahrzeug befahren werden kann. Alternativ könnte eine Spur in beiden Fahrtrichtungen befahren werden können. Je nach Anzahl der Spuren und der Umgebung des automatisierten Transportsystems können die zulässigen Fahrtrichtungen gewählt werden. Auch ist es denkbar, die zulässigen Fahrtrichtungen dynamisch auszugestalten, beispielsweise in Abhängigkeit der Anzahl der fahrerlosen Transportfahrzeuge und/oder der nicht-fahrerlosen Transportfahrzeuge und/oder der Fahraufträge etc.

In Bezug auf das Verfahren wird die zugrundeliegende Aufgabe durch die Merkmale von Anspruch 4 gelöst. Danach weist ein Verfahren zum automatisierten Fahren eines fahrerlosen Transportfahrzeugs in einem automatisierten Transportsystem nach einem der Ansprüche 1 bis 3, von einer Ausgangspose zu einer Endpose, wobei die Endpose in einem Endmanöverbereich liegt, folgende Verfahrensschritte auf:
- ermitteln, ob die Ausgangspose in einem Startmanöverbereich oder auf einer Spur liegt,
   o falls die Ausgangspose in einem Startmanöverbereich liegt, ermitteln einer Trajektorie zu der auf einer Spur liegenden Ausfahrpose des Startmanöverbereichs und abfahren der Trajektorie zu der Ausfahrpose,
- abfahren der Spur bis zu der Einfahrpose des Endmanöverbereichs,
- ermitteln einer Trajektorie von der Einfahrpose des Endmanöverbereichs zum der Endpose und abfahren der Trajektorie zu der Endpose.

In Bezug auf das Verfahren wird die zugrundeliegende Aufgabe auch durch die Merkmale von Anspruch 5 gelöst. Danach weist ein Verfahren zum automatisierten Fahren eines fahrerlosen Transportfahrzeugs in einem automatisierten Transportsystem nach einem der Ansprüche 1 bis 3 von einer Ausgangspose zu einer Endpose, wobei die Endpose in einem Endmanöverbereich liegt, die folgenden Verfahrensschritte auf:
- ermitteln, ob die Ausgangspose in einem Startmanöverbereich oder auf einer Spur liegt,
   o falls die Ausgangspose in einem Startmanöverbereich liegt, ermitteln ob der Startmanöverbereich mit dem Endmanöverbereich zumindest teilweise überlappt,
      ▪ falls der Startmanöverbereich mit dem Endmanöverbereich zumindest teilweise überlappt, ermitteln einer Trajektorie von der Ausgangspose zu der Endpose und abfahren dieser Trajektorie, oder
      ▪ falls der Startmanöverbereich überlappungsfrei mit dem Endmanöverbereich ist, ermitteln einer Trajektorie zu der auf einer Spur liegenden Ausfahrpose des Startmanöverbereichs, abfahren der Trajektorie zu der Ausfahrpose, und abfahren der Spur bis zu der Einfahrpose des Endmanöverbereichs, und ermitteln einer Trajektorie von der Einfahrpose des Endmanöverbereichs zum der Endpose und abfahren der Trajektorie zu der Endpose.

Den erfindungsgemäßen Verfahren liegt ebenfalls die Idee zugrunde, dass ein Fahrauftrag von einem fahrerlosen Transportfahrzeug mit weniger Aufwand dabei sicherer und insgesamt einfacher durchführbar ist, wenn der Transportauftrag in ein oder mehrere Nahbereichsmanöver und ein, ggf. mehrere, Distanzfahrten unterteilt wird. Sofern sich das Transportfahrzeug zu Beginn des Fahrauftrags außerhalb eines Startmanöverbereichs und somit auf einer Spur befindet (Ausgangspose), kann es direkt dieser Spur zu der Einfahrpose des Endmanöverbereichs folgen. Befindet sich die Ausgangspose innerhalb eines Startmanöverbereichs, wird zunächst eine dynamische Trajektorie hin zu der Ausfahrpose dieses Startmanöverbereichs ermittelt und abgefahren. Sobald sich das Transportfahrzeug an der Ausfahrpose befindet, kann es der Spur folgen, welche zu der Einfahrpose des Endmanöverbereichs führt. Sobald sich das Transportfahrzeug in der Einfahrpose befindet, wird eine dynamische Trajektorie ermittelt, die zu der gewünschten Endpose führt. Mit anderen Worten werden bei einem Verfolgen einer Spur zumindest im Wesentlichen immer die gleichen Wegpunkte abgefahren, wobei die Ermittlung der Trajektorie jedes Mal dynamisch erfolgt, wobei es denkbar ist, dass dynamische Elemente, beispielsweise temporäre Hindernisse im Manöverbereich, oder eine leicht abweichende Zielposition des Transportbehälters, berücksichtigt werden. Dabei müssen die dynamischen Trajektorien nicht kartiert werden und könnte bei der Ermittlung der dynamischen Trajektorie die Kinematik des Transportfahrzeugs berücksichtigt werden.

Die mit den Ansprüchen 4 und 5 beanspruchten Verfahren schließen sich nicht gegenseitig aus und können daher gemeinsam oder zumindest in Teilen gemeinsam realisiert werden.

Es wird nochmals darauf hingewiesen, dass die tatsächliche Endpose vorgegeben sein kann, jedoch auch - dynamisch - geändert werden könnte. Beispielsweise ist es denkbar, dass von einer Sensorik des Transportfahrzeugs ein Transportbehälter, beispielsweise eine Wechselbrücke, erkannt wird und anhand dieser Daten eine Endpose ermittelt wird, von welcher aus ein Aufnahmevorgang, beispielsweise ein Unterfahren der Wechselbrücke, gestartet werden kann. Beispielsweise kann sich die tatsächliche bzw. angepasste Endpose sodann aufgrund des Typs des Transportbehälters, dessen Orientierung, dessen Position, dessen Pose etc. unterscheiden.

In weiter erfindungsgemäßer Weise ist bei dem Verfahren gemäß Anspruch 5 erkannt worden, dass wenn sich der Startmanöverbereich und der Endmanöverbereich überlappen, eine direkte Trajektorie zu der Endpose ermittelt werden kann und von dem Transportfahrzeug abgefahren wird, ohne dass dazwischen einer definierten Spur im Sinne einer Distanzfahrt gefolgt wird. Mit anderen Worten können bei einem Fahrauftrag bzw. Fahrmanöver, welches die Zurücklegung einer kurzen Distanz notwendig macht, der Startmanöverbereich und der damit überlappende Endmanöverbereich miteinander fusioniert werden, so dass ein größerer Gesamtmanöverbereich entsteht, in welchem das Transportfahrzeug einer direkten, dynamisch ermittelten Trajektorie zu der Endpose folgt. Sofern der Startmanöverbereich und der Endmanöverbereich nicht überlappen, wird zunächst eine Trajektorie zu der Ausfahrpose des Startmanöverbereichs bestimmt und diese abgefahren. Sodann kann der Spur bis zu der Eingangspose des Endmanöverbereichs gefolgt werden. Von der Eingangspose zur der Endpose wird eine dynamische Trajektorie ermittelt und abgefahren. Sofern sich die Ausgangspose des Transportfahrzeugs nicht in einem Manöverbereich und somit auf einer Spur befindet, kann es direkt der Spur zu der Eingangspose des Endmanöverbereichs folgen. Sodann kann eine Trajektorie zu der Endpose ermitteln und abgefahren werden.

In vorteilhafter weise kann die Trajektorie innerhalb eines Manöverbereichs derart ermittelt werden, dass das Transportfahrzeug und ggf. ein mit dem Transportfahrzeug gekoppelter Transportbehälter den zugehörigen Manöverbereich nicht verlässt, wenn das Transportfahrzeug dieser Trajektorie folgt. Dies hat den Vorteil, dass sich das Transportfahrzeug und ggf. ein mit diesem gekoppelter Transportbehälter stets in einem definierten Bereich befindet, nämlich dem zugehörigen Manöverbereich. Dadurch lassen sich Gefährdungen durch das Transportfahrzeug reduzieren. Von besonderem Vorteil ist es dabei, wenn bei der Ermittlung der Trajektorie berücksichtigt wird, ob ein Transportbehälter mit dem Transportfahrzeug gekoppelt ist, beispielsweise eine Wechselbrücke aufgenommen ist. Dadurch kann berücksichtigt werden, dass sich die Kontur des Systems aus Transportfahrzeug und damit gekoppeltem Transportbehälter von der Kontur des reinen Transportfahrzeugs unterscheidet. Somit kann eine Trajektorie ermittelt werden, bei welcher sich das Transortfahrzeug und der damit gekoppelte Transportbehälter jeweils innerhalb des Manöverbereichs befinden. Beispielsweise könnte über eine Sensorik erkannt werden, ob ein Transportbehälter an das Transportfahrzeug angekoppelt ist. Generell ist es von Vorteil, wenn die Überprüfung der Pose des Transportfahrzeuges und ein Abgleich mit der Karte durch die Lokalisierung separat bzw. redundant erfolgt. Dadurch wird verhindert, dass ein Fehler in der Lokalisierung dazu führen könnte, dass die berechnete Trajektorie zwar innerhalb des Manöverbereichs bleibt, welcher dem Berechnungssystem übergeben wurde, aber dieser sich von dem eigentlich gemäß dem Logistikhof vorgesehenen Manöverbereich unterscheidet.

Gemäß einer vorteilhaften Ausgestaltung kann die Ermittlung der dynamischen Trajektorie innerhalb eines Manöverbereichs durch eine Steuereinrichtung des Transportfahrzeugs erfolgen. Alternativ oder zusätzlich könnte die Ermittlung der dynamischen Trajektorie innerhalb eines Manöverbereichs durch eine externe Recheneinrichtung erfolgen und an das Transportfahrzeug übertragen werden.

In weiter vorteilhafter Weise kann während des Abfahrens einer Spur von dem Transportfahrzeug der in Fahrtrichtung gesehen vor dem Transportfahrzeug liegende Fahrbereich überwacht werden, wobei das Transportfahrzeug bei Erkennung eines Hindernisses auf eine benachbarte Spur wechselt, um das Hindernis zu umfahren. Dies hat den Vorteil, dass lediglich für den Spurwechsel kurzfristig eine Trajektorie zu ermitteln ist, das Transportfahrzeug sodann jedoch wieder die vorgegebene Spur abfährt. Somit kann ein Stillstand, der durch ein Hindernis auf der Spur hervorgerufen würde, auf besonders einfache Weise vermieden werden.

Gemäß einer vorteilhaften Ausgestaltung kann die Ermittlung der dynamischen Trajektorie innerhalb eines Manöverbereichs unter Berücksichtigung eines Fahrauftrags erfolgen, insbesondere ein Aufnehmen oder Absetzen eines Transportbehälters, beispielsweise einer Wechselbrücke, eines Containers und/oder eines Sattelaufliegers. Die Ermittlung der Trajektorie kann insbesondere auch umfassen, dass die tatsächliche Endpose ermittelt wird, beispielsweise unter Berücksichtigung des aufzunehmenden oder abzusetzenden Ladungsträgers. In diesem Fall kann die Endpose der Pose des Transportfahrzeugs entsprechen, von der aus ein Aufnahme- oder Absetzmanöver gestartet wird, beispielsweise eine aufzunehmende Wechselbrücke unterfahren werden kann. Das Aufnahmemanöver könnte beispielsweise das Unterfahren und Anheben des Transportbehälters, beispielsweise einer Wechselbrücke, umfassen. Das Absetzmanöver könnte das Einfahren auf einen Stellplatz und Absetzen des Transportbehälters, beispielsweise einer Wechselbrücke, umfassen. In diesem Zusammenhang ist es denkbar, dass je nachdem welchen Transportbehälter (unterschiedliche Längen) das Transportfahrzeug geladen hat, die Endpose des Transportfahrzeugs neu ermittelt bzw. verschoben wird, um damit zu gewährleisten, dass der Transportbehälter an der gewünschten Stelle steht, beispielsweise an der Rampe und nicht in einem zu großen Abstand davor.

In weiter vorteilhafter Weise kann, falls sich die Ausgangspose des Transportfahrzeugs in dem Startmanöverbereich befindet, zunächst eine Trajektorie ermittelt werden, um in dem Startmanöverbereich einen ersten Teil eines Fahrauftrags durchzuführen, insbesondere einen Transportbehälter, beispielsweise eine Wechselbrücke, aufzunehmen oder abzusetzen, und diese Trajektorie abgefahren werden.

In Bezug auf das fahrerlose Transportfahrzeug wird die zugrundeliegende Aufgabe durch die Merkmale von 11 gelöst. Damit ist ein fahrerloses Transportfahrzeug, beispielsweise ein Wechselbrückenhubwagen, eine Zugmaschine oder ein Industriehubwagen, mit mindestens einem Lokalisierungssystem, mindestens einem Abstandsensor, insbesondere einem optoelektronischen Sensor, und einer Steuereinrichtung zur Durchführung des Verfahrens nach einem der Ansprüche 4 bis 10 angegeben.

Es wird ausdrücklich darauf hingewiesen, dass das erfindungsgemäße Transportfahrzeug oder mehrere der erfindungsgemäßen Transportfahrzeuge Teil des erfindungsgemäßen automatisierten Transportsystems nach einem der Ansprüche 1 bis 3 sein kann.

In vorteilhafter Weise kann das Lokalisierungssystem mittels eine Navigationssattelitensystems, beispielsweise GPS, und/oder mittels Odometrie die Pose des Transportfahrzeugs bestimmen. Alternativ oder zusätzlich könnte eine inertiale Messeinheit, sog. IMU, angeordnet sein, welche mehrere Inertialsensoren aufweist, so dass eine Posenbestimmung ermöglicht ist.

In weiter vorteilhafter Weise kann es sich bei dem Abstandsensor um einen optoelektronischen Sensor, insbesondere einen Lidar-Sensor, und/oder eine TOF-Kamera und/oder eine Stereo-Kamera und/oder einen Radar-Sensor handeln.

Gemäß einer vorteilhaften Ausgestaltung kann das Transportfahrzeug einen fest angeordneten Ladungsträger aufweisen oder dazu ausgebildet sein, einen Ladungsträger temporär aufzunehmen, beispielsweise als Wechselbrückenhubwagen.

Es gibt nun verschiedene Möglichkeiten, die Lehre der vorliegenden Erfindung in vorteilhafter Weise auszugestalten und weiterzubilden. Dazu ist einerseits auf die abhängigen Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen automatisierten Transportsystems, an dem auch ein erfindungsgemäßes Verfahren erläutert wird,
- Fig. 2: in einer weiteren schematischen Darstellung das automatisierte Transportsystem gemäß Fig. 1, an dem ein weiteres Ausführungsbeispiel eines erfindungsgemäßen Verfahrens erläutert wird,
- Fig. 3: in einer vereinfachten, schematischen Darstellung einen Teilausschnitt aus einem erfindungsgemäßen automatisierten Transportsystem, an dem ein weiteres Ausführungsbeispiel eines erfindungsgemäßen Verfahrens erläutert wird,
- Fig. 4: in einer schematischen Darstellung zwei benachbarte Spuren eines erfindungsgemäßen automatisierten Transportsystems,
- Fig. 5: in einer schematischen Darstellung eine Seitenansicht eines Ausführungsbeispiels eines erfindungsgemäßen fahrerlosen Transportfahrzeugs, und
- Fig..6: in einer schematischen Darstellung eine Draufsicht auf das fahrerlose Transportfahrzeug gemäß Fig. 5.

In den Figuren sind gleiche Elemente jeweils mit den gleichen Bezugsziffern versehen, wobei zur Vereinfachung der Übersichtlichkeit nicht zwangsweise jedes Element jeweils mit einer Bezugsziffer gekennzeichnet ist.

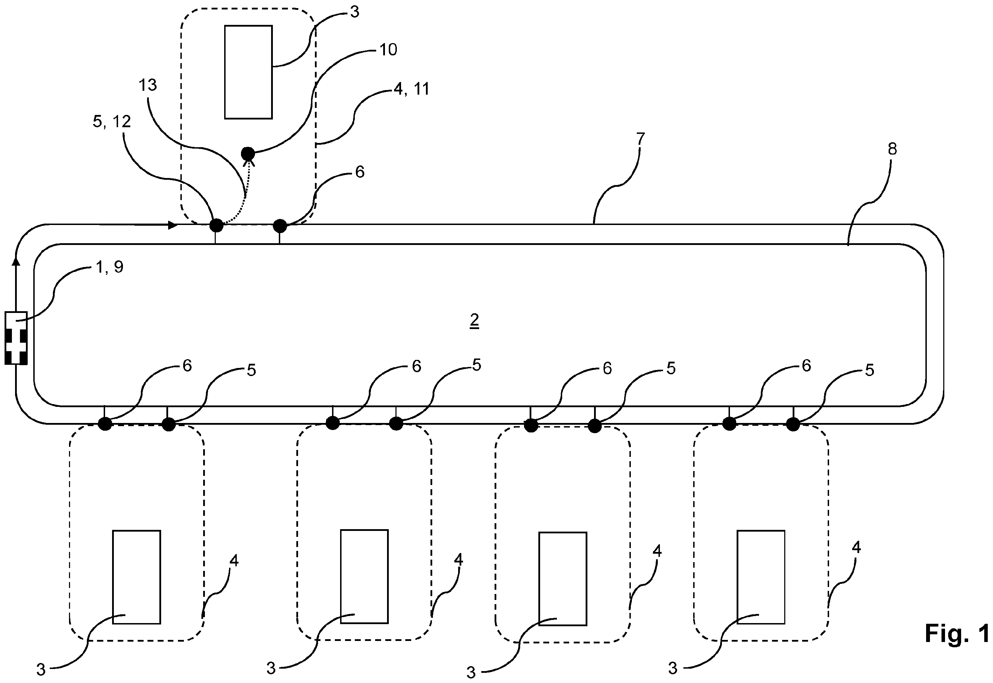

Fig. 1 zeigt in einer schematischen Darstellung ein Ausführungsbeispiel eines erfindungsgemäßen automatisierten Transportsystems, an dem auch ein erfindungsgemäßes Verfahren erläutert wird.

Das automatisierte Transportsystem weist eine mit einem, insbesondere fahrerlosen, Transportfahrzeug 1 befahrbare Oberfläche 2 auf, die mehrere vordefinierte Posen 3 umfasst, welche von dem Transportfahrzeug 1 angefahren werden können. Bei den Posen 3 kann es sich beispielsweise um einen Stellplatz für einen Transportbehälter oder das Transportfahrzeug 1 als solches handeln. Insbesondere kann es sich auch um einen Stellplatz für eine Wechselbrücke handeln.

Die anfahrbahren Posen 3 liegen jeweils in einem vordefinierten Manöverbereich 4, der eine Einfahrpose 5 und eine Ausfahrpose 6 aufweist. Auch wenn die Einfahrpose 5 und die Ausfahrpose 6 hier als nicht identisch dargestellt sind, können diese identische sein, d.h. die Einfahrpose 5 und die Ausfahrpose 6 eines Manöverbereichs 4 können auf der gleichen Stelle liegen. Des Weiteren könnten die Einfahrpose 5 und/oder die Ausfahrpose 6 auch nicht kartiert sein, sondern ermittelt werden.

Des Weiteren sind zwei Spuren 7, 8 vorgesehen, welche die Manöverbereiche 4, hier die Einfahrposen 5 und die Ausfahrposen 6, miteinander verbinden. Es wird darauf hingewiesen, dass lediglich eine einzige Spur 7 oder auch mehr als zwei Spuren 7, 8 vorgesehen sein können.

Wesentlich ist, dass die Spuren 7, 8 fest definiert sind und es erlauben, dass ein fahrerloses Transportfahrzeug diesen folgen kann. Hierzu können die Spuren 7, 8 durch Daten eines Navigationssattelitensystems definiert sein und/oder durch an der befahrbaren Oberfläche 2 angeordnete Markierungen, beispielsweise Transponder und/oder visuelle Markierungen, definiert sein. Es ist alternativ oder zusätzlich auch denkbar, dass die Spuren 7, 8 durch Daten von einem fusionierten Lokalisierungssystem definiert sind, so dass anhand von Landmarken wie z.B. Häusern, welche von dem fahrerlosen Transportfahrzeug 1 erkannt werden, ein Abfahren der Spur ermöglicht wird.

Bei dem in Fig. 1 gezeigten Ausführungsbeispiel befindet sich das Transportfahrzeug 1 zunächst in seiner Ausgangspose 9 und erhält den Fahrauftrag, zur Endpose 10 des Endmanöverbereichs 11 zu fahren, beispielsweise um eine Wechselbrücke von einem Stellplatz aufzunehmen oder auf diesem abzusetzen. Es wird darauf hingewiesen, dass die Endpose 10 nicht zwangsweise vor den anfahrbaren Posen 3, beispielsweise Stellplätzen oder Transportbehältern, liegen muss, sondern auch auf bzw. "unter" diesen. In einem solchen Fall könnte die Endpose 10 die Pose darstellen, in welcher ein Transportbehälter aufgehoben oder abgesetzt werden kann. Nachdem erkannt worden ist, dass sich die Ausgangspose 9 außerhalb eines Manöverbereichs 4 und somit auf einer Spur 7, 8 befindet, folgt das fahrerlose Transportfahrzeug 1 der Spur 7 in Richtung der Pfeile bis zu der Einfahrpose 12. Wenn das fahrerlose Transportfahrzeug 1 die Einfahrpose 12 erreicht hat, wird eine Trajektorie 13 von der Einfahrpose 12 des Endmanöverbereichs 11 zu der Endpose 10 ermittelt und abgefahren. Es ist denkbar, dass die tatsächliche Endpose 10 angepasst werden kann, beispielsweise, wenn mit Annäherung an einen aufzunehmenden Transportbehälter erkannt wird, dass dieser schräg auf dem Stellplatz steht. Um ein Aufnahmemanöver zum Aufnehmen dieses Transportbehälters von der Endpose 10 zu starten, kann es beispielsweise vorgesehen sein, dass das Transportfahrzeug 1 in einer geraden Linie unter den Transportbehälter einfährt. Somit muss die Endpose 10 angepasst werden, was möglich ist, wenn die Ausrichtung bzw. Position des Transportbehälters durch das Transportfahrzeug 1 erkannt worden ist. Generell könnte die Trajektorie auch eine Kombination aus vorwärts- und rückwärtsgerichteten Bewegungen des Transportfahrzeugs 1 umfassen.

Sofern während des Verfolgens der Spur 7, beispielsweise von dem fahrerlosen Transportfahrzeug 1, erkannt wird, dass ein Hindernis die Spur 7 versperrt, kann das fahrerlose Transportfahrzeug durch einen Wechsel auf die Spur 8 dieses Hindernis umfahren.

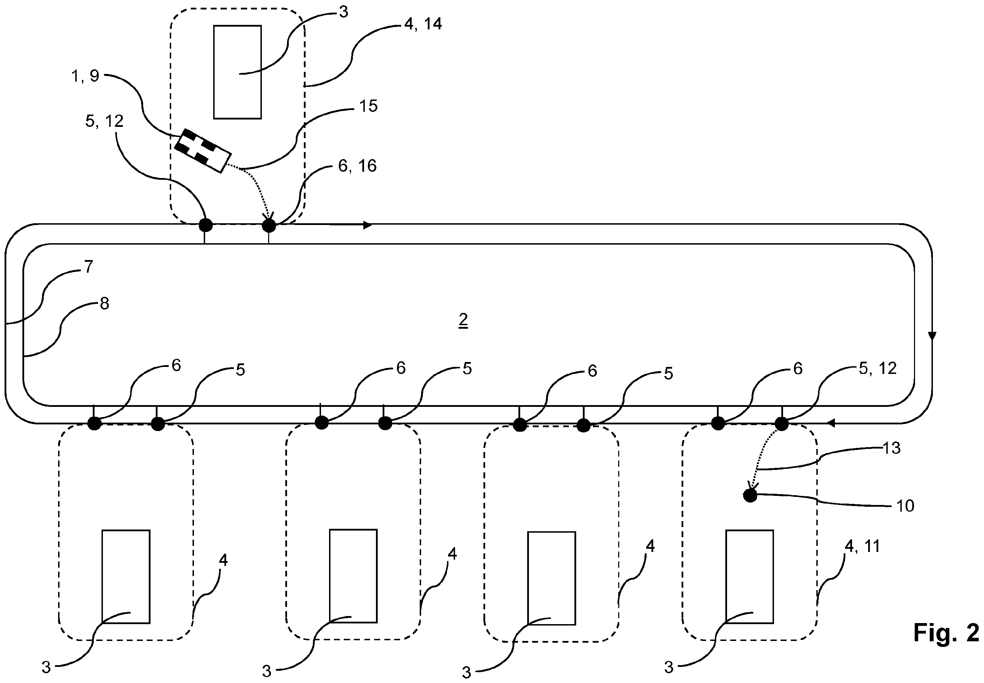

Fig. 2 zeigt in einer weiteren schematischen Darstellung das automatisierte Transportsystem gemäß Fig. 1. In diesem Ausführungsbeispiel erhält das fahrerlose Transportfahrzeug 1 einen Fahrauftrag, wobei sich die Ausgangspose 9 innerhalb eines Startmanöverbereichs 14 befindet. Es wird sodann zunächst eine Trajektorie 15 zu der auf einer Spur 7, 8 liegenden Ausfahrpose 16 des Startmanöverbereichs 14 ermittelt und diese Trajektorie 15 bis zu der Ausfahrpose 16 abgefahren, welche auf der Spur 7, 8 liegt. Sodann folgt das fahrerlose Transportfahrzeug 1 der Spur 7 in Richtung der Pfeile bis zu der Einfahrpose 12 des Endmanöverbereichs 11. Wenn das fahrerlose Transportfahrzeug 1 die Einfahrpose 12 erreicht hat, wird eine Trajektorie 13 von der Einfahrpose 12 des Endmanöverbereichs 11 zu der Endpose 10 ermittelt und abgefahren. Des Weiteren gelten die Ausführungen zu Fig. 1 analog für Fig. 2, so dass zur Vermeidung von Wiederholungen auf diese verwiesen wird.

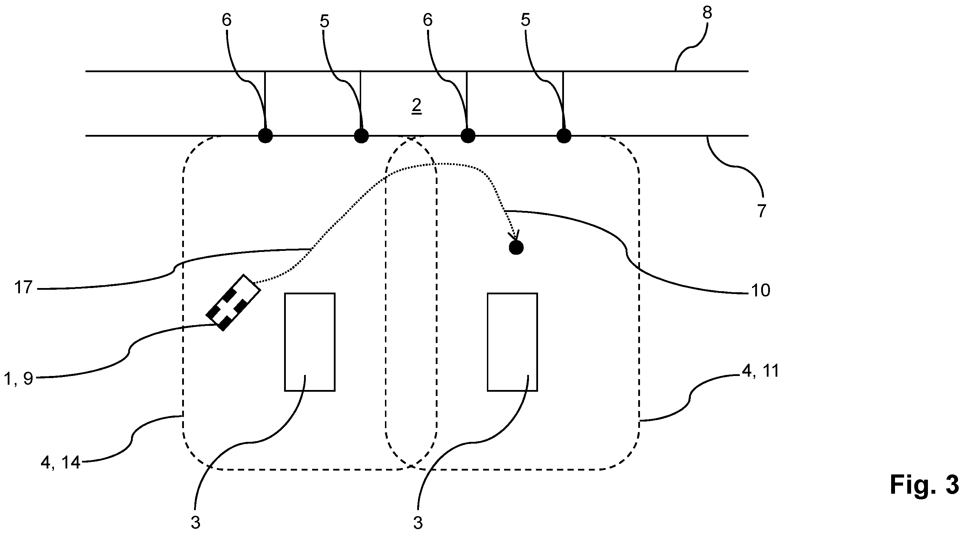

Fig. 3 zeigt in einer vereinfachten, schematischen Darstellung einen Teilausschnitt aus einem erfindungsgemäßen automatisierten Transportsystem, an dem ein weiteres Ausführungsbeispiel eines erfindungsgemäßen Verfahrens erläutert wird. Hierbei ist zu erkennen, dass die Ausgangspose 9 des fahrerlosen Transportfahrzeugs 1 zu Beginn eines Fahrauftrags in einem Startmanöverbereich 14 liegt, der mit dem Endmanöverbereich 11 zumindest teilweise überlappt. Daher werden der Startmanöverbereich 14 und der Endmanöverbereich 11 zu einem gemeinsamen Manöverbereich "fusioniert" und es wird eine Trajektorie 17 ermittelt, die von der Ausgangspose 9 zu der Endpose 10 führt. Diese Trajektorie 17 wird sodann abgefahren bis zu der Endpose 10. Das fahrerlose Transportfahrzeug 1 und ggf. ein aufgenommener Transportbehälter befindet bzw. befinden sich während des Abfahrens der Trajektorie 17 stets vollständig innerhalb des durch den Startmanöverbereich 14 und den Endmanöverbereich 11 gebildeten gemeinsamen Manöverbereich.

Somit erfolgt bei nah beieinanderliegendem Startmanöverbereich 14 und der Endmanöverbereich 11 keine Fahrt auf einer Spur 7, 8, sondern wird direkt eine Trajektorie 18 ermittelt. Des Weiteren wird zur Vermeidung von Wiederholungen auf die Ausführungen zu Fig. 1 und 2 verwiesen, die analog für Fig. 3 gelten. Auch ist wesentlich, dass die mit den Fig. 1 bis 3 beschriebenen Verfahren sich nicht gegenseitig ausschließen und daher gemeinsam oder zumindest in Teilen gemeinsam realisiert werden können.

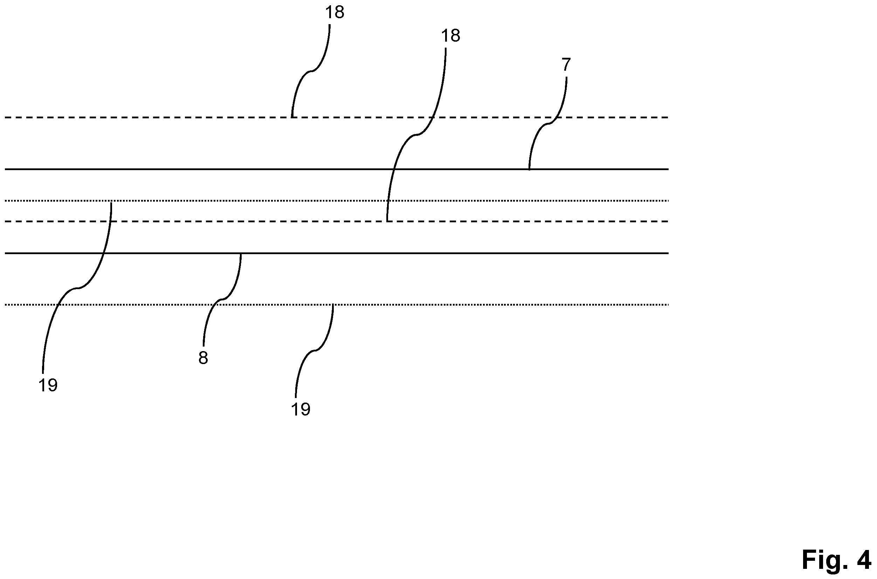

Fig. 4 zeigt in einer schematischen Darstellung zwei benachbarte Spuren 7, 8 eines erfindungsgemäßen automatisierten Transportsystems. Des Weiteren sind jeweils die Fahrbahnen der Spuren 7, 8 dargestellt. Die Fahrbahn der Spur 7 ist durch die gestrichelten Linien 18 und die Fahrbahn der Spur 8 ist durch die gepunkteten Linien 19 dargestellt. Dabei ist deutlich zu erkennen, dass in diesem Ausführungsbeispiel die Fahrbahnen der benachbarten Spuren 7, 8 miteinander überlappen. Dies ist bevorzugt, muss jedoch nicht zwangsweise der Fall sein. Eine solche Ausgestaltung ist insbesondere von Vorteil für Spuren 7, 8, auf welchen das Transportfahrzeug 1 die gleiche Fahrtrichtung aufweist. Es ist auch denkbar, dass die Spuren 7, 8 derart weit auseinanderliegen, dass die Fahrbahnen nicht miteinander überlappen. Dies ist insbesondere bei Spuren 7, 8 von Vorteil, auf welchen das Transportfahrzeug 1 einer entgegengesetzten Fahrtrichtung folgt, so dass vermieden wird, dass zwei Transportfahrzeuge 1 sich gegenseitig blockieren. Des Weiteren geht aus Fig. 4 hervor, dass die Spuren 7, 8 die Breite 0 bzw. im Wesentlichen die Breite 0 aufweisen.

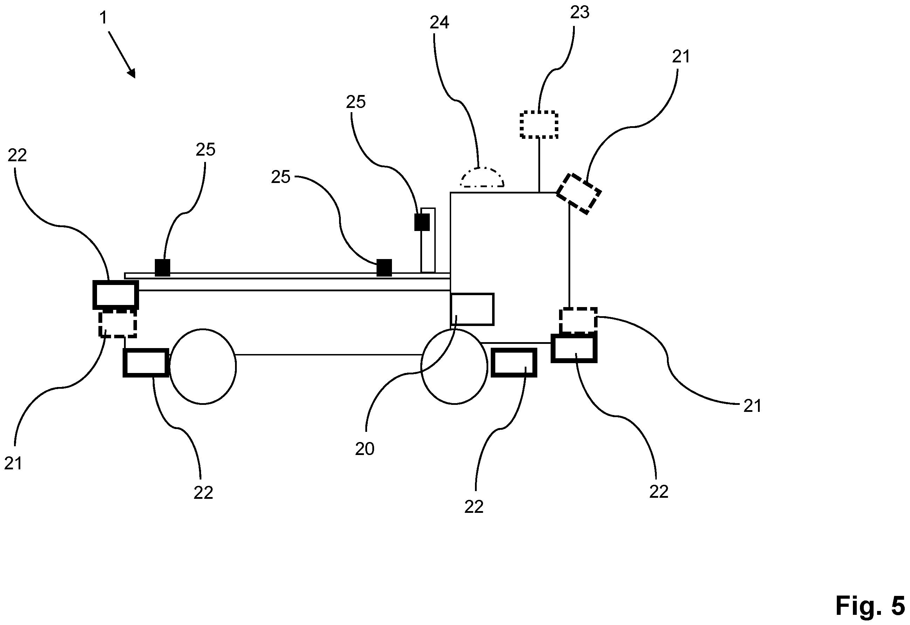

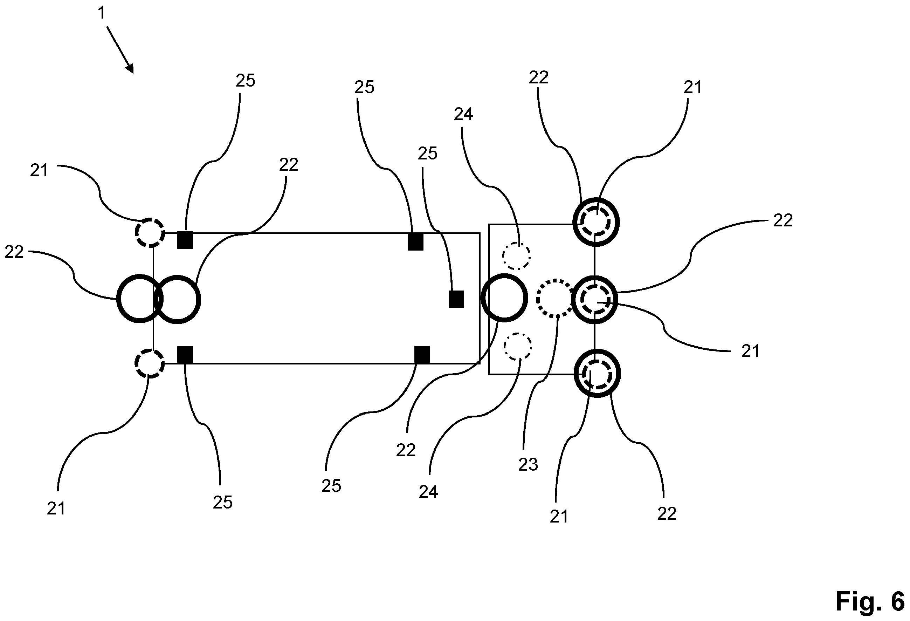

Die Fig. 5 und 6 zeigen ein Ausführungsbeispiel eines erfindungsgemäßen fahrerlosen Transportfahrzeugs 1. Bei diesem kann es sich beispielsweise um einen Wechselbrückenhubwagen handeln. Das Transportfahrzeug 1 weist eine Steuereinrichtung 20 zur Durchführung des erfindungsgemäßen Verfahrens und mehrere Sensoren auf. Im Konkreten sind fünf Sensoren 21, beispielsweise 3D-Lidar-Sensoren, zur Umfelderfassung und Lokalisierung des fahrerlosen Transportfahrzeugs 1 sowie sechs Sensoren 22, beispielsweise 2D- oder 3D-Lidar-Sensoren, zur Personenerkennung angeordnet. Des Weiteren ist ein Sensor 23, beispielsweise ein 3D-Lidar-Sensor, zu Lokalisierung des fahrerlosen Transportfahrzeugs 1 angeordnet. Um eine Verbindung mit einem globalen Navigationssatellitensystem (GNSS), beispielsweise GALILEO oder GPS, herzustellen, sind zwei GNSS-Antennen 24 angeordnet. Des Weiteren sind fünf Sensoren 25 angeordnet, beispielsweise induktive Sensoren, um den Ladezustand des fahrerlosen Transportfahrzeugs zu erkennen, beispielsweise, ob eine Wechselbrücke geladen ist oder nicht.

Es wird ausdrücklich darauf hingewiesen, dass nicht zwangsweise sämtliche der voranstehend genannten Sensoren 21, 22, 23, 25 angeordnet sein müssen, des Weiteren kann auch deren Anzahl und Anordnung von dem gezeigten Ausführungsbeispiel abweichen. Auch muss nicht zwangsweise eine GNSS-Antenne 24 vorgesehen sein bzw. kann lediglich eine oder können mehr als zwei GNSS-Antennen 24 an dem fahrerlosen Transportfahrzeug 1 angeordnet sein.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Transportfahrzeug
- 2: befahrbare Oberfläche
- 3: anfahrbahre Posen
- 4: Manöverbereich
- 5: Einfahrpose
- 6: Ausfahrpose
- 7: Spur
- 8: Spur
- 9: Ausgangspose
- 10: Endpose
- 11: Endmanöverbereich
- 12: Einfahrpose (Endmanöverbereich)
- 13: Trajektorie
- 14: Startmanöverbereich
- 15: Trajektorie
- 16: Ausfahrpose (Startmanöverbereich)
- 17: Trajektorie
- 18: gestrichelte Linie
- 19: gepunktete Linie
- 20: Steuereinrichtung
- 21: Sensor
- 22: Sensor
- 23: Sensor
- 24: GNSS-Antenne
- 25: Sensor

## Patentansprüche

1. Automatisiertes Transportsystem für Transportbehälter, insbesondere Container und/oder Wechselbrücken und/oder Sattelauflieger, vorzugsweise zur Anwendung auf einem Logistikhof, mit einer von einem Transportfahrzeug (1) befahrbaren Oberfläche (2) umfassend mehrere vordefinierte, von dem Transportfahrzeug (1) anfahrbare Posen (3), insbesondere Stellplätze und/oder Laderampen und/oder Docks, wobei jede der anfahrbaren Posen (3) innerhalb eines vordefinierten Manöverbereichs (4) liegt, wobei jeder Manöverbereich (4) mindestens eine Einfahrpose (5) und mindestens eine Ausfahrpose (6) aufweist und wobei mindestens eine Spur (7, 8) für das Transportfahrzeug (1) vordefiniert ist, welche die Manöverbereiche (4) miteinander verbindet, insbesondere deren Einfahrposen (5) und Ausfahrposen (6).

2. Automatisiertes Transportsystem nach Anspruch 1, **dadurch gekennzeichnet, dass** die mindestens eine Spur (7, 8) durch Daten eines Navigationssattelitensystems definiert ist und/oder dass die mindestens eine Spur (7, 8) durch an der befahrbaren Oberfläche (2) angeordnete Markierungen, beispielsweise Transponder und/oder visuelle Markierungen, definiert ist und/oder dass die mindestens eine Spur (7, 8) durch Daten von einem fusionierten Lokalisierungssystem definiert sind.

3. Automatisiertes Transportsystem nach Anspruch 1 oder 2, **dadurch gekennzeichnet, dass** zumindest zwei Spuren (7, 8) benachbart zueinander angeordnet sind, vorzugsweise in einem Abstand von 0,5m bis 1m.

4. Verfahren zum automatisierten Fahren eines fahrerlosen Transportfahrzeugs (1) in einem automatisierten Transportsystem nach einem der Ansprüche 1 bis 3, von einer Ausgangspose (9) zu einer Endpose (10), wobei die Endpose (10) in einem Endmanöverbereich (11) liegt, mit folgenden Verfahrensschritten:
- ermitteln, ob die Ausgangspose (9) in einem Startmanöverbereich (14) oder auf einer Spur (7, 8) liegt,
o falls die Ausgangspose (9) in einem Startmanöverbereich (14) liegt, ermitteln einer Trajektorie (13, 15, 17) zu der auf einer Spur (7, 8) liegenden Ausfahrpose (6) des Startmanöverbereichs (14) und abfahren der Trajektorie (13, 15, 17) zu der Ausfahrpose (6),
- abfahren der Spur (7, 8) bis zu der Einfahrpose (5) des Endmanöverbereichs (11),
- ermitteln einer Trajektorie (13, 15, 17) von der Einfahrpose (5) des Endmanöverbereichs (11) zu der Endpose (10) und abfahren der Trajektorie (13, 15, 17) zu der Endpose (10).

5. Verfahren zum automatisierten Fahren eines fahrerlosen Transportfahrzeugs (1) in einem automatisierten Transportsystem nach einem der Ansprüche 1 bis 3 von einer Ausgangspose (9) zu einer Endpose (10), wobei die Endpose (10) in einem Endmanöverbereich (11) liegt, mit folgenden Verfahrensschritten:
- ermitteln, ob die Ausgangspose (9) in einem Startmanöverbereich (14) oder auf einer Spur (7, 8) liegt,
o falls die Ausgangspose (9) in einem Startmanöverbereich (14) liegt, ermitteln ob der Startmanöverbereich (14) mit dem Endmanöverbereich (11) zumindest teilweise überlappt,
▪ falls der Startmanöverbereich (14) mit dem Endmanöverbereich (11) zumindest teilweise überlappt, ermitteln einer Trajektorie (13, 15, 17) von der Ausgangspose (9) zu der Endpose (10) und abfahren dieser Trajektorie (13, 15, 17), oder
▪ falls der Startmanöverbereich (14) überlappungsfrei mit dem Endmanöverbereich (11) ist, ermitteln einer Trajektorie (13, 15, 17) zu der auf einer Spur (7, 8) liegenden Ausfahrpose (6) des Startmanöverbereichs (14), abfahren der Trajektorie (13, 15, 17) zu der Ausfahrpose (6), und abfahren der Spur (7, 8) bis zu der Einfahrpose (5) des Endmanöverbereichs (11), und ermitteln einer Trajektorie (13, 15, 17) von der Einfahrpose (5) des Endmanöverbereichs (11) zum der Endpose (10) und abfahren der Trajektorie (13, 15, 17) zu der Endpose (10).

6. Verfahren nach Anspruch 4 oder 5, **dadurch gekennzeichnet, dass** die Trajektorie (13, 15, 17) innerhalb eines Manöverbereichs (4) derart ermittelt wird, dass das Transportfahrzeug (1) und ggf. ein mit dem Transportfahrzeug (1) gekoppelter Transportbehälter sich stets vollständig in dem zugehörigen Manöverbereich (4) befindet, wenn das Transportfahrzeug (1) dieser Trajektorie (13, 15, 17) folgt.

7. Verfahren nach einem der Ansprüche 4 bis 6, **dadurch gekennzeichnet, dass** die Ermittlung der Trajektorie (13, 15, 17) innerhalb eines Manöverbereichs (4) durch eine Steuereinrichtung (20) des Transportfahrzeugs (1) erfolgt und/oder dass die Ermittlung der Trajektorie (13, 15, 17) innerhalb eines Manöverbereichs (4) durch eine externe Recheneinrichtung erfolgt und an das Transportfahrzeug (1) übertragen wird.

8. Verfahren nach einem der Ansprüche 4 bis 7, **dadurch gekennzeichnet, dass** während des Abfahrens einer Spur (7, 8) von dem Transportfahrzeug (1) der in Fahrtrichtung gesehen vor dem Transportfahrzeug (1) liegende Fahrbereich überwacht wird und dass das Transportfahrzeug (1) bei erkennen eines Hindernisses auf eine benachbarte Spur (7, 8) wechselt, um das Hindernis zu umfahren.

9. Verfahren nach einem der Ansprüche 4 bis 8, **dadurch gekennzeichnet, dass** die Ermittlung der Trajektorie (13, 15, 17) innerhalb eines Manöverbereichs (4) unter Berücksichtigung eines Fahrauftrags erfolgt, insbesondere ein Aufnehmen oder Absetzen eines Transportbehälters, beispielsweise einer Wechselbrücke.

10. Verfahren nach einem der Ansprüche 4 bis 9, **dadurch gekennzeichnet, dass** falls sich die Ausgangspose (9) des Transportfahrzeugs (1) in dem Startmanöverbereich (14) befindet, zunächst eine Trajektorie (13, 15, 17) ermittelt wird, um in dem Startmanöverbereich (14) einen ersten Teil eines Fahrauftrags durchzuführen, insbesondere einen Transportbehälter, beispielsweise eine Wechselbrücke, aufzunehmen oder abzusetzen, und dass die Trajektorie (13, 15, 17) abgefahren wird.

11. Fahrerloses Transportfahrzeug (1), beispielsweise Wechselbrückenhubwagen, Zugmaschine oder Industriehubwagen, mit mindestens einem Lokalisierungssystem, mindestens einem, insbesondere optoelektronischen, Sensor (21, 22, 23, 25) und einer Steuereinrichtung (20) zur Durchführung des Verfahrens nach einem der Ansprüche 4 bis 10.
